# EUROPÄISCHE PATENTSCHRIFT

(11) **EP 2 269 099 B1**
(45) Veröffentlichungstag und Bekanntmachung des Hinweises auf die Patenterteilung: **08.06.2016**
(21) Anmeldenummer: 09732748.0
(22) Anmeldetag: 03.04.2009
(51) Int. Cl.: G02B 5/08, F24J 2/14

(54) **FLEXIBLER SELBSTTRAGENDER REFLEKTOR FÜR EINE PARABOLRINNE**
FLEXIBLE SELF-SUPPORTING REFLECTOR FOR A PARABOLIC TROUGH
RÉFLECTEUR AUTOPORTANT SOUPLE POUR UNE AUGE PARABOLIQUE

(30) Priorität: 16.04.2008 DE 102008018963
(43) Veröffentlichungstag der Anmeldung: 05.01.2011
(73) Patentinhaber: Deutsches Zentrum für Luft- und Raumfahrt, 51147 Köln (DE)
(72) Erfinder: LÜPFERT, Eckhard, 51143 Köln (DE)
(74) Vertreter: dompatent von Kreisler Selting Werner - Partnerschaft von Patent- und Rechtsanwälten mbB
(86) Internationale Anmeldenummer: PCT/EP2009/054017
(87) Internationale Veröffentlichungsnummer: WO 2009/127538

(56) Entgegenhaltungen:
- FR-A- 2 396 245
- US-A- 4 666 263
- US-A- 5 982 546

## Beschreibung

Die Erfindung betrifft einen flexiblen selbsttragenden Reflektor für eine Parabolrinne, die Parabolrinne selbst, ein Verfahren zur Herstellung des Reflektors, ein Verfahren zur Herstellung der Parabolrinne sowie die Verwendung des Reflektors.

Parabolspiegel zur Bündelung von Sonnenstrahlung in Kollektoren zur Wärme- und Stromgewinnung werden mit gekrümmten Spiegeln ausgestattet, um das Sonnenlicht auf den Fokus zu konzentrieren.

Diese Spiegel werden gewöhnlich aus Glas, Aluminium oder Kunststofffolien hergestellt.

Das gebräuchlichste Material zur Konzentrierung von Sonnenlicht ist rückseitig verspiegeltes Floatglas. In den meisten Anwendungen größerer Anlagen (Almeria, Kalifornien, ...) wird so genanntes Dickglas für Heliostaten von Solarturm-Anlagen und für die Parabol-Form von Rinnen-Kollektoren eingesetzt.

In weiteren Fällen wird Dünnglas auf einem Träger, beispielsweise Stahlblech, eingesetzt. Spezielle Untersuchungen gibt es zur Qualifizierung von verspiegeltem Aluminiumblech oder anderen frontseitig verspiegelten Materialien. Dünne Reflektorfolie aus Kunststoff ist ebenfalls im Einsatz.

Für die energetische Nutzung der Sonnenstrahlung sind hohe Reflexionsgrade erforderlich. Um eine Wirtschaftlichkeit zu erreichen, müssen hochwertige Spiegel verwendet werden. Glas-Spiegel setzten den Maßstab mit Reflektivitätswerten von 90% und mehr, bezogen auf das Solarspektrum.

Im Betrieb von solchen konzentrierenden Kollektoren ist es dazu erforderlich, die Reflektoroberfläche durch Waschen frei von Schmutz zu halten.

Glas hat sich unter den Witterungsbedingungen des Einsatzes in Solarkollektoren bisher als einziges Material dauerhaft beständig gegen Degradation gezeigt.

Der Nachteil von Glas ist jedoch offensichtlicher Weise die Bruchgefahr bei der Montage, bei der Reinigung und Wartung und bei Umgebungseinflüssen wie Sturm und Hagel. Neben dem entstehenden Sachschaden ist eine Gefährdung von Personen durch Glasscherben gegeben. Herunterfallende Bruchstücke führen außerdem zu Sekundärschäden an benachbarten Glasspiegeln oder dem teuren Receiver-Rohr. Durch den Austausch gebrochener Spiegel entstehen Kosten für die notwendigen Arbeiten.

Die Herstellung von gebogenen Spiegelfacetten aus Floatglas erfordert einen aufwändigen Prozess bei Temperaturen um 600 °C, die Verspiegelung und Versiegelung der Rückseite erfolgt anschließend.

Üblicherweise werden für Parabolrinnen Parabolspiegel aus Glas eingesetzt, die beispielsweise Ausmaße von 1,60 m x 1,70 m aufweisen. Aufgrund der etablierten Fertigungsprozesse von Flachglas ist die maximale Größe von Glaselementen auf 6 m x 3, 20 m beschränkt. Diese bislang üblichen Spiegel müssen bereits vor dem Transport zum Aufstellungsort gebogen werden und können daher nicht kompakt angeliefert werden. Der Transport dieser großen und gebogenen Spiegel stellt ein erhebliches Problem dar.

Zudem sind einige dieser Spiegel frontseitig verspiegelt, d.h. dass die Spiegelschicht auf der dem Sonnenlicht zugewandten Seite liegt. Dies hat sich als besonders nachteilig erwiesen, da diese Spiegelschicht eine Metallschicht ist, die so der Witterung ausgesetzt ist und daher die optische Qualität schnell abnimmt.

DE 10 2004 054 755 A1 beschreibt eine Vorrichtung zur Konzentration von einfallendem Licht, wobei eine Abdeckung aus Acrylglas vorgesehen sein kann. Es wird daher in bereits bekannten Parabolrinnen mit einer der Lichtquelle zugewandten Metallschicht ein zusätzliches Schutzgehäuse vorgesehen.

DE 197 05 046 A1 beschreibt eine Vorrichtung zur Nutzung der Solarenergie mit einem Lichttransportelement und einem Lichtverteiler, wobei dieser aus einem transparenten Polymerfestkörper bestehen kann.

DE 27 08 499 A1 beschreibt einen Sonnenkollektor aus einem zylindrischen Parabolspiegel, wobei die Spiegelfläche der Lichtseite zugewandt ist und auf einem Polymersubstrat vorgesehen ist.

US 4,666,263 A **offenbart einen Reflektor mit einer Silberschicht und einer daran anschließenden transparenten Kunststoffschicht mit einer exemplarischen Schichtdicke von 0,76 mm.**

US 5,982,546 A **beschreibt einen reflektierenden Film aus einer transparenten polymeren Schicht, auf welche eine dünne Lage aus Silber aufgetragen ist.**

FR 2 396 245 A1 **offenbart eine Parabolrinne mit einem Reflektor, der aus einer Polycarbonatschicht besteht, auf deren Rückseite sich eine reflektive Aluminiumschicht befindet.**

Die Aufgabe der vorliegenden Erfindung besteht also darin, einen einfach herzustellenden und einfach zu transportierenden Reflektor bereitzustellen, der gegenüber Umwelteinflüssen ohne zusätzliche Maßnahmen unempfindlich ist.

Diese der Erfindung zugrunde liegende Aufgabe wird in einer ersten Ausführungsform gelöst durch einen selbsttragenden Reflektor für eine Parabolrinne **aus mindestens zwei Schichten aus transparentem Kunststoff, die jeweils an dieselbe Metallschicht angrenzen mit**
**(a) einer Reflektivität von mindestens 90% bezogen auf das Solarspektrum,**
**(b) mindestens einer, einer Lichtquelle zugewandten Schicht aus einem transparenten Kunststoff, welche eine Schichtdicke in einem Bereich von 0,1 mm bis 8 mm aufweist,**
**(c) mindestens einer an die Schicht gemäß (b) anschließenden Metallschicht, welche eine Schichtdicke in einem Bereich von 0,5 µm bis 500 µm aufweist, und**
**(d) eine rückseitig an die Metallschicht gemäß (c) anschließende weitere Kunststoffschicht mit einer Schichtdicke von 1 mm bis 15 mm.**

Der erfindungsgemäße Reflektor hat ein deutlich geringeres Gewicht als Glas oder Metalle, die bisher eingesetzt wurden. Zudem weist der erfindungsgemäße Reflektor eine wesentlich höhere Schlagbeständigkeit als Glas auf. Er hat wesentlich flexiblere Konstruktionseigenschaften, was die Form und die Verarbeitung angeht. Zudem kann der erfindungsgemäße Reflektor hervorragend in Extrusionsprozessen hergestellt werden. Eine thermische Verformung, wenn überhaupt nötig, ist bei wesentlich niedrigeren Temperaturen als bei Glas möglich. Zudem besteht durch den erfindungsgemäßen Reflektor keine Gefährdung von Personen durch Splitter.

Der erfindungsgemäße Reflektor ist vorzugsweise flexibel. Dadurch lässt sich der Reflektor besonders einfach beispielsweise flach transportieren und am Bestimmungsort in Parabelform aufbauen.

Der Reflektor weist vorzugsweise einen minimalen Biegeradius in einem Bereich von 0,2 bis 8 m auf. Dies hat den Vorteil gegenüber vorbekannten Reflektoren, dass der erfindungsgemäße Reflektor beispielsweise leicht in Rollenform transportiert werden kann.

Alternativ kann der Reflektor aber beispielsweise auch starr sein. Dies kann durch Warmverformung in der Herstellung realisiert werden. Dies hat den Vorteil, dass der Reflektor am Bestimmungsort nicht extra in die gewünschte Form gebracht werden muss.

Die Lichtquelle ist beispielsweise die Sonne oder eine Vorrichtung, die Sonnenlicht auf den Reflektor lenkt.

Vorteilhafterweise ist der selbsttragende Reflektor nur eindimensional gebogen. Dies hat beim erfindungsgemäßen Reflektor den Vorteil, dass er sehr kompakt, beispielsweise flach oder aufgerollt angeliefert werden kann und anschließend lediglich beispielsweise in Parabol-Form gebogen werden muss.

Das Flächengewicht liegt vorteilhafterweise in einem Bereich von 1 bis 20 kg/m², insbesondere bevorzugt 2 bis 10 kg/m². Dadurch ist der erfindungsgemäße Reflektor wesentlich leichter als bislang bekannte Reflektoren für Parabolrinnen und kann dadurch nicht nur leichter transportiert sondern auch besser installiert werden.

Vorzugsweise ist der transparente Kunststoff ausgewählt aus Polycarbonat, Polymethylmethacrylat, Styrol-Acrylnitril-Polymer und/oder Polystyrol. Diese Polymere sind aufgrund ihrer exzellenten optischen Eigenschaften besonders gut für die Schicht geeignet, die der Lichtquelle zugewandt ist.

Das Metall der Metallschicht ist vorteilhafterweise ausgewählt aus Aluminium, Silber oder Gold. Dabei ist Silber besonders bevorzugt, da es das Sonnenspektrum besonders effizient reflektiert.

Besonders vorteilhaft ist es, wenn mindestens eine Schicht aus transparentem Kunststoff eine Schichtdicke in einem Bereich von 0,5 bis 4 mm aufweist. Diese Schicht ist besonders bevorzugt die der Lichtquelle zugewandte Schicht. Die bevorzugte Schichtdicke hat sich als besonders geeignet erwiesen, um Umwelteinflüsse von der Metallschicht fernzuhalten und andererseits genügend dünn zu sein, um die hohe Reflektivität zu erreichen.

Darüber hinaus kann der erfindungsgemäße Reflektor vorzugsweise mit einer üblichen Kratzschutzschicht versehen sein.

Die der Lichtquelle zugewandte Schicht aus transparentem Kunststoff kann zusätzlich mit einem UV-Schutz versehen sein. Dieser kann entweder in die Schicht selbst eingebracht sein oder auf die Schicht aufgebracht sein.

Die Oberfläche der Kunststoffschicht ist vorzugsweise auf der lichtabgewandten Seite sehr glatt. Bei Spiegeln wird die Oberflächenglattheit üblicherweise in der Aufweitung eines auftreffenden Laserstrahls quantifiziert. Daher sorgt der erfindungsgemäße Reflektor bei einem auftreffenden Laserstrahl bei einer Wellenlänge von 532 nm (grün) für eine Aufweitung von höchstens 2 mrad. Aus diesem Grund ist vorzugsweise auch die Oberfläche der Kunststoffschicht auf der licht-zugewandten Seite sehr glatt.

**Weiterhin ist** eine rückseitig an die Metallschicht anschließende weitere Kunststoffschicht vorgesehen. Diese Schicht weist eine Schichtdicke im Bereich von 1 bis 15 mm auf.

Die Metallschicht hat vorteilhafterweise eine Schichtdicke in einem Bereich von 1 bis 50 µm. Dieser Schichtdickenbereich hat den besonderen Vorteil, dass hierdurch der Biegeradius des erfindungsgemäßen Reflektors erheblich verringert werden kann, und dadurch die erfindungsgemäßen Reflektoren wesentlich einfacher transportiert werden können.

Der Reflektor weist vorzugsweise zwei Schichten aus Kunststoff auf, die jeweils vorder- und rückseitig an dieselbe Metallschicht angrenzen. Dadurch ist die Metallschicht von beiden Seiten von Kunststoff eingeschlossen und so auch von der Rückseite der Witterung nicht ausgesetzt. Die Lebensdauer des erfindungsgemäßen Reflektors kann dadurch 20 und mehr Jahre betragen erheblich verlängert werden. Zudem ist die Metallschicht dadurch beim Transport wesentlich weniger anfällig für Kratzer oder andere mechanische Einflüsse.

Die Länge des Reflektors beträgt vorzugsweise mindestens 7 m, insbesondere mindestens 10 m. Dadurch können erstmals wesentlich größere Spiegel von Parabolrinnen eingesetzt werden, ohne wie bislang Zwischenraum zwischen den einzelnen Spiegelelementen zu verschenken.

In einer weiteren Ausführungsform wird die der Erfindung zugrunde liegende Aufgabe gelöst durch eine Parabolrinne umfassend die erfindungsgemäßen Reflektoren.

In einer weiteren Ausführungsform wird die der Erfindung zugrunde liegende Aufgabe gelöst durch ein Verfahren zur Herstellung eines erfindungsgemäßen Reflektors, bei dem man mindestens eine Schicht aus transparentem Kunststoff mit einer Metallschicht coextrudiert. Dabei wird die Metallschicht vorteilhafterweise als Folie eingesetzt. Das erfindungsgemäße Verfahren hat den besonderen Vorteil gegenüber den bislang bekannten Verfahren zur Herstellung von Reflektoren für Parabolrinnen, dass prinzipiell beliebig große Reflektoren erzeugt werden können, ohne das eine spätere thermische Verformung notwendig werden würde. Zudem muss die Reflexionsschicht (Metallschicht) nicht wie bislang in einem Vakuumprozess aufwendig aufgedampft werden.

Im erfindungsgemäßen Verfahren bringt man die Reflektoren vorteilhafterweise durch Kaltverformung in Parabelform. Dadurch, kann die Endform für den Reflektor auch am Ort der Aufstellung der Parabolrinne erzeugt werden.

Wie bereits oben erwähnt, kann der Reflektor auch starr sein und dann vorzugsweise alternativ auch durch Warmverformung hergestellt sein. Dadurch ergibt sich der Vorteil, dass der Reflektor am Bestimmungsort nicht extra in seine Form gebracht werden muss.

In einer weiteren Ausführungsform wird die der Erfindung zugrunde liegende Aufgabe gelöst durch die Verwendung des erfindungsgemäßen Reflektors in einer Parabolrinne, in Konzentratoren, insbesondere Dish-Konzentratoren, oder als dekoratives Fassaden-Element für Gebäude.

### Ausführungsbeispiel

Der erfindungsgemäße Reflektor wurde auf einer Extrusionsanlage so hergestellt, indem Granulat von Polycarbonat aufgeschmolzen wurde und mit Hilfe einer Extruderschnecke durch Schlitzdüsen gedrückt wurde. Diese Schlitzdüsen waren bei der Extrusion so angeordnet, dass zwischen den entstehenden Schichten eine Silberfolie nachgeführt werden konnte. Die Silberfolie wurde in genau derselben Geschwindigkeit nachgeführt, wie die Kunststoffschichten aus dem Extruder entstanden sind. Dabei wurde eine der Schlitzdüsen so ausgewählt, dass eine 0,3 mm dicke Schicht aus Polycarbonat auf der einen Seite der Folie entstanden ist und die andere Schlitzdüse unterhalb der Folie wurde so ausgewählt, dass dort eine Schicht mit einer Dicke von 4 mm entstanden ist. Die Silberfolie selbst wies eine Schichtdicke von 25 µm auf. Es wurde insgesamt ein erfindungsgemäßer Reflektor mit einer Größe von 7 m x 0,5 m erzeugt. Dieser Reflektor wurde mit üblichen Strukturelementen versehen, um die genaue Parabelform zu erzeugen und zu erhalten. Dabei wurde der erfindungsgemäße Reflektor mit üblichen angeklebten Festigungselementen versehen.

Die Aufweitung eines grünen Laserstrahls betrug weniger als 2 mrad. Die Lichtreflexion von Sonnenlicht betrug mindestens etwa 93 %.

## Patentansprüche

1. Selbsttragender Reflektor für die Herstellung einer Parabolrinne durch Kalt- oder Warmverformung **aus mindestens zwei Schichten aus transparentem Kunststoff, die jeweils an dieselbe Metallschicht angrenzen** mit
(a) einer Reflektivität von mindestens 90% bezogen auf das Solarspektrum,
(b) mindestens einer, einer Lichtquelle zugewandten Schicht aus einem transparenten Kunststoff, welche eine Schichtdicke in einem Bereich von 0,1 mm bis 8 mm aufweist,
(c) mindestens einer an die Schicht gemäß (b) anschließenden Metallschicht, welche eine Schichtdicke in einem Bereich von 0,5 µm bis 500 µm aufweist, **und**
(d) **eine rückseitig an die Metallschicht gemäß (c) anschließende weitere Kunststoffschicht mit einer Schichtdicke von 1 mm bis 15 mm.**

2. Reflektor gemäß Anspruch 1, **dadurch gekennzeichnet, dass** der transparente Kunststoff ausgewählt ist aus Polycarbonat, Polymethylmethacrylat, Styrol-Acrylnitril-Polymer und/oder Polystyrol.

3. Reflektor gemäß Anspruch 1, **dadurch gekennzeichnet, dass** das Metall der Metallschicht ausgewählt ist aus Al, Ag und/oder Au.

4. Reflektor gemäß Anspruch 1, **dadurch gekennzeichnet, dass** mindestens eine Schicht aus transparentem Kunststoff eine Schichtdicke in einem Bereich von 0,5 bis 4 mm aufweist.

5. Reflektor gemäß Anspruch 1, **dadurch gekennzeichnet, dass** die Metallschicht eine Schichtdicke in einem Bereich von 1 bis 50 µm aufweist.

6. Reflektor gemäß Anspruch 1, **dadurch gekennzeichnet, dass** die Länge des Reflektors mindestens 7 m, insbesondere mindestens 10 m beträgt.

7. Parabolrinne umfassend Reflektoren gemäß Anspruch 1.

8. Verfahren zur Herstellung eines Reflektors gemäß Anspruch 1, bei dem man mindestens eine Schicht aus transparentem Kunststoff mit einer Metallschicht coextrudiert.

9. Verfahren zur Herstellung einer Parabolrinne gemäß Anspruch **7, dadurch gekennzeichnet, dass** man die Reflektoren gemäß Anspruch 1 durch Kaltverformung in Parabelform bringt.

10. Verfahren zur Herstellung einer Parabolrinne gemäß Anspruch **7, dadurch gekennzeichnet, dass** man die Reflektoren gemäß Anspruch 1 durch Warmverformung in Parabelform bringt.

11. Verwendung des Reflektors gemäß Anspruch 1 in einer Parabolrinne, in Konzentratoren oder als dekoratives Fassaden-Element für Gebäude.

## Claims

1. A self-supporting reflector for preparing a parabolic trough by cold or warm forming from at least two layers of transparent plastic material that are both contiguous to the same metal layer:
(a) having a reflectance of at least 90%, based on the solar spectrum;
(b) comprising at least one layer of a transparent plastic material facing a light source and having a layer thickness within a range of from 0.1 mm to 8 mm; and
(c) at least one metal layer contiguous to the layer according to (b) and having a layer thickness within a range of from 0.5 µm to 500 µm, and
(d) another plastic layer contiguous to the back side of the metal layer according to (c) and having a layer thickness of from 1 mm to 15 mm.

2. The reflector according to claim 1, **characterized in that** said transparent plastic material is selected from polycarbonate, poly(methyl methacrylate), styrene-acrylonitrile polymer and/or polystyrene.

3. The reflector according to claim 1, **characterized in that** said metal of the metal layer is selected from Al, Ag and/or Au.

4. The reflector according to claim 1, **characterized in that** said at least one layer of transparent plastic material has a layer thickness within a range of from 0.5 to 4 mm.

5. The reflector according to claim 1, **characterized in that** said metal layer has a layer thickness within a range of from 1 to 50 µm.

6. The reflector according to claim 1, **characterized in that** the length of the reflector is at least 7 m, especially at least 10 m.

7. A parabolic trough comprising reflectors according to claim 1.

8. A process for preparing a reflector according to claim 1, wherein at least one layer of transparent plastic material is coextruded with a metal layer.

9. A process for preparing a parabolic trough according to claim 7, **characterized in that** the reflectors according to claim 1 are brought into parabolic shape by cold forming.

10. A process for preparing a parabolic trough according to claim 7, **characterized in that** the reflectors according to claim 1 are brought into parabolic shape by warm forming.

11. Use of the reflector according to claim 1 in a parabolic trough, in concentrators or as a decorative façade element for buildings.

## Revendications

1. Réflecteur autoportant pour la fabrication d'une auge parabolique par formage à froid ou à chaud à partir d'au moins deux couches de plastique transparent, chacune contiguë à la même couche métallique,
(a) ayant une réflectance d'au moins 90 % par rapport au spectre solaire,
(b) comprenant au moins une couche de plastique transparent faisant face à une source de lumière, présentant une épaisseur de couche comprise entre 0,1 mm et 8 mm,
(c) comprenant au moins une couche métallique contiguë à la couche selon (b), présentant une épaisseur de couche comprise entre 0,5 µm et 500 µm, et
(d) une autre couche de plastique contiguë au côté arrière de la couche métallique selon (c), présentant une épaisseur de couche de 1 mm à 15 mm.

2. Réflecteur selon la revendication 1, **caractérisé en ce que** le plastique transparent est choisi parmi polycarbonate, polyméthacrylate de méthyle, polymère de styrène et d'acrylonitrile, et/ou polystyrène.

3. Réflecteur selon la revendication 1, **caractérisé en ce que** le métal de la couche métallique est choisi parmi Al, Ag et/ou Au.

4. Réflecteur selon la revendication 1, **caractérisé en ce qu'**au moins une couche de plastique transparent présente une épaisseur de couche comprise entre 0,5 et 4 mm.

5. Réflecteur selon la revendication 1, **caractérisé en ce que** la couche métal-lique présente une épaisseur de couche comprise entre 1 et 50 µm.

6. Réflecteur selon la revendication 1, **caractérisé en ce que** la longueur du réflecteur est au moins 7 m, notamment au moins 10 m.

7. Auge parabolique comprenant des réflecteurs selon la revendication 1.

8. Procédé pour la fabrication d'un réflecteur selon la revendication 1, dans lequel au moins une couche de plastique transparent est coextrudée avec une couche métallique.

9. Procédé pour la fabrication d'une auge parabolique selon la revendication 7, **caractérisé en ce que** l'on met les réflecteurs selon la revendication 1 dans une forme parabolique par formage à froid.

10. Procédé pour la fabrication d'une auge parabolique selon la revendication 7, **caractérisé en ce que** l'on met les réflecteurs selon la revendication 1 dans une forme parabolique par formage à chaud.

11. Utilisation du réflecteur selon la revendication 1 dans une auge parabolique, dans des concentrateurs ou comme élément de façade décoratif pour des bâtiments.
